# EUROPÄISCHE PATENTSCHRIFT

(11) **EP 3 089 061 B1**
(45) Veröffentlichungstag und Bekanntmachung des Hinweises auf die Patenterteilung: **05.07.2017**
(21) Anmeldenummer: 16170085.1
(22) Anmeldetag: 13.11.2008
(51) Int. Cl.: G06F 21/31, G06Q 20/40, H04L 9/32, H04L 29/06, G06Q 20/34, G07F 7/10, G06F 21/43, G06F 21/44, G06F 21/35, G06F 21/33

(54) **VERFAHREN ZUM LESEN VON ATTRIBUTEN AUS EINEM ID-TOKEN**
METHOD FOR READING ATTRIBUTES FROM AN ID-TOKEN
METHODE DE LECTURE DES ATTRIBUTS D'UN TOKEN ID

(30) Priorität: 16.01.2008 DE 102008000067
(43) Veröffentlichungstag der Anmeldung: 02.11.2016
(62) Teilanmeldung aus: 08870896.1
(73) Patentinhaber: Bundesdruckerei GmbH, 10969 Berlin (DE)
(72) Erfinder: DIETRICH, Frank, 12437 Berlin (DE); BYSZIO-WEGENER, Frank, 16348 Wandlitz (DE); PAESCHKE, Manfred, 16352 Basdorf (DE)
(74) Vertreter: Richardt Patentanwälte PartG mbB

(56) Entgegenhaltungen:
- US-A1- 2001 045 451
- US-A1- 2004 230 831
- "Information technology - Open Systems Interconnection - The Directory: Public-key and attribute certificate frameworks; X.509 (08/05)", ITU-T STANDARD IN FORCE (I), INTERNATIONAL TELECOMMUNICATION UNION, GENEVA, CH, Nr. X.509 (08/05), 29. August 2005 (2005-08-29), XP017405086,
- REXHA B: "Increasing User Privacy in Online Transactions with X.509 v3 Certificate Private Extensions and Smartcards", E-COMMERCE TECHNOLOGY, 2005. CEC 2005. SEVENTH IEEE INTERNATIONAL CONF ERENCE ON MUNICH, GERMANY 19-22 JULY 2005, PISCATAWAY, NJ, USA,IEEE, 19. Juli 2005 (2005-07-19), Seiten 293-300, XP010846208, ISBN: 978-0-7695-2277-7
- ALEKSANDRA NENADIC ET AL: "FAME: Adding Multi-Level Authentication to Shibboleth", E-SCIENCE AND GRID COMPUTING, 2006. E-SCIENCE '06. SECOND IEEE IN TERNATIONAL CONFERENCE ON, IEEE, PI, 1. Dezember 2006 (2006-12-01), Seiten 157-157, XP031030837, ISBN: 978-0-7695-2734-5
- TEWFIQ EL MALIKI ET AL: "A Survey of User-centric Identity Management Technologies", EMERGING SECURITY INFORMATION, SYSTEMS, AND TECHNOLOGIES, 2007. SECUREWARE 2007. THE INTERNATIONAL CONFERENCE ON, IEEE, PISCATAWAY, NJ, USA, 1. Oktober 2007 (2007-10-01), Seiten 12-17, XP031162162, ISBN: 978-0-7695-2989-9

## Beschreibung

Die Erfindung betrifft ein Verfahren zum Lesen von zumindest einem Attribut aus einem ID-Token, ein Computerprogrammprodukt, einen ID-Token sowie ein Computersystem.

Die vorliegende Erfindung ist eine Teilanmeldung von EP 08 870 896.1 (PCT/EP2008/065470), deren Offenbarungsgehalt hiermit vollumfänglich durch Inbezugnahme zum Gegenstand der vorliegenden Teilanmeldung gemacht wird.

Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert.

Der Erfindung liegt demgegenüber die Aufgabe zugrunde, ein verbessertes Verfahren zum Lesen zumindest eines Attributs zu schaffen, sowie ein entsprechendes Computerprogrammprodukt, einen ID-Token und ein Computersystem.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Erfindungsgemäß wird ein Verfahren zum Lesen zumindest eines in einem ID-Token gespeicherten Attributs geschaffen, wobei der ID-Token einem Nutzer zugeordnet ist. Das Verfahren beinhaltet die folgenden Schritte: Authentifizierung des Nutzers gegenüber dem ID-Token; Authentifizierung eines ersten Computersystems gegenüber dem ID-Token; nach erfolgreicher Authentifizierung des Nutzers und des ersten Computersystems gegenüber dem ID-Token, Lesezugriff des ersten Computersystems auf das zumindest eine in dem ID-Token gespeicherte Attribut zur Übertragung des zumindest einen Attributs an ein zweites Computersystem. Hierdurch kann ein "Vertrauensanker" geschaffen werden.

Die Erfindung ermöglicht das Lesen eines oder mehrerer der in einem ID-Token gespeicherten Attribute durch das erste Computersystem, wobei die Verbindung zwischen dem ID-Token und dem ersten Computersystem über ein Netzwerk, insbesondere das Internet, aufgebaut werden kann. Bei dem zumindest einem Attribut kann es sich um eine Angabe bezüglich der Identität des dem ID-Token zugeordneten Nutzers handeln, insbesondere bezüglich dessen so genannter digitaler Identität. Beispielsweise werden durch das erste Computersystem die Attribute Name, Vorname, Adresse gelesen, um diese Attribute an ein zweites Computersystem, zum Beispiel eines Online-Dienstes, weiterzuleiten.

Es kann aber zum Beispiel auch nur ein einzelnes Attribut gelesen werden, welches nicht zur Feststellung der Identität des Nutzers, sondern beispielsweise zur Überprüfung der Berechtigung des Benutzers zur Inanspruchnahme eines bestimmten Online-Dienstes dient, wie zum Beispiel das Alter des Nutzers, wenn dieser einen Online-Dienst in Anspruch nehmen möchte, der einer bestimmten Altersgruppe vorbehalten ist, oder ein anderes Attribut, welches die Zugehörigkeit des Nutzers zu einer bestimmten Gruppe dokumentiert, welche zur Nutzung des Online-Dienstes berechtigt ist.

Bei dem ID-Token kann es sich um ein tragbares elektronisches Gerät, wie zum Beispiel einen so genannten USB-Stick, handeln oder um ein Dokument, insbesondere ein Wert- oder Sicherheitsdokument.

Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung des zumindest einen Attributs integriert ist.

Ausführungsformen der Erfindung sind also besonders vorteilhaft, da das zumindest eine Attribut aus einem besonders vertrauenswürdigen Dokument, beispielsweise einem amtlichen Dokument, ausgelesen wird. Von besonderem Vorteil ist weiterhin, dass eine zentrale Speicherung der Attribute nicht erforderlich ist. Die Erfindung ermöglicht also ein besonders hohes Maß an Vertrauenswürdigkeit hinsichtlich der Mitteilung der zu einer digitalen Identität gehörenden Attribute, verbunden mit einem optimalen Datenschutz bei äußerst bequemer Handhabung.

Nach einer Ausführungsform der Erfindung hat das erste Computersystem zumindest ein Zertifikat, welches zur Authentifizierung des ersten Computersystems gegenüber dem ID-Token verwendet wird. Das Zertifikat beinhaltet eine Angabe derjenigen Attribute, für welche das erste Computersystem eine Leseberechtigung hat. Der ID-Token prüft anhand dieses Zertifikats, ob das erste Computersystem die erforderliche Leseberechtigung für den Lesezugriff auf das Attribut hat, bevor ein solcher Lesezugriff durch das erste Computersystem durchgeführt werden kann.

Nach einer Ausführungsform der Erfindung sendet das erste Computersystem das zumindest eine von dem ID-Token ausgelesene Attribut unmittelbar an ein zweites Computersystem. Bei dem zweiten Computersystem kann es sich zum Beispiel um einen Server zur Erbringung eines Online-Dienstes oder eines sonstigen Dienstes, wie zum Beispiel einer Bankdienstleistung oder zur Bestellung eines Produkts handeln. Beispielsweise kann der Nutzer ein Konto online eröffnen, wozu Attribute, die die Identität des Nutzers beinhalten, von dem ersten Computersystem an das zweite Computersystem einer Bank übertragen werden.

Nach einer Ausführungsform der Erfindung erfolgt die Übertragung der aus dem ID-Token gelesenen Attribute von dem ersten Computersystem zunächst an ein drittes Computersystem des Nutzers. Beispielsweise hat das dritte Computersystem einen üblichen Internetbrowser, mit dem der Nutzer eine Webseite des zweiten Computersystems öffnen kann. Der Nutzer kann in die Webseite eine Anforderung oder Bestellung für einen Dienst oder ein Produkt eingeben.

Das zweite Computersystem spezifiziert daraufhin diejenigen Attribute, zum Beispiel des Nutzers oder seines ID-Tokens, welche es für die Erbringung des Dienstes oder die Annahme der Bestellung benötigt. Die entsprechende Attributspezifikation, die die Spezifizierung dieser Attribute beinhaltet, wird sodann von dem zweiten Computersystem an das erste Computersystem gesendet. Dies kann mit oder ohne Zwischenschaltung des dritten Computersystems erfolgen. Im letzteren Fall kann der Nutzer das gewünschte erste Computersystem gegenüber dem zweiten Computersystem spezifizieren, beispielsweise durch Eingabe der URL des ersten Computersystems in eine Webseite des zweiten Computersystems von dem dritten Computersystem aus.

Nach einer Ausführungsform der Erfindung beinhaltet die Dienst-Anforderung des Nutzers an das zweite Computersystem die Angabe eines Identifikators, wobei der Identifikator das erste Computersystem identifiziert. Beispielsweise handelt es sich bei dem Identifikator um einen Link, beispielsweise eine URL des ersten Computersystems.

Nach einer Ausführungsform der Erfindung wird die Attributspezifizierung nicht unmittelbar von dem zweiten Computersystem an das erste Computersystem gesendet, sondern zunächst von dem zweiten Computersystem an das dritte Computersystem. Das dritte Computersystem hat mehrere vordefinierte Konfigurationsdatensätze, wobei der dritte Computer mehrere vordefinierte Konfigurationsdatensätze aufweist, wobei jeder der Konfigurationsdatensätze eine Teilmenge der Attribute, zumindest eine Datenquelle und ein erstes Computersystem aus einer Menge von ersten Computersystemen spezifiziert, wobei die Attributspezifikation von dem zweiten Computersystem zunächst an das dritte Computersystem übertragen wird, sodass mittels des dritten Computersystems zumindest einer der Konfigurationsdatensätze auswählt wird, der eine Teilmenge der Attribute spezifiziert, welche das zumindest eine in der Attributspezifikation spezifizierte Attribut beinhaltet, und wobei der dritte Computer die Attributspezifikation an das erste Computersystem weiterleitet, und die Verbindung mit dem durch die Angabe der Datenquelle in dem ausgewählten Konfigurationsdatensatz spezifizierten ID-Token aufgebaut wird.

Nach einer Ausführungsform der Erfindung werden die aus dem ID-Token ausgelesenen Attribute von dem ersten Computersystem signiert und dann an das dritte Computersystem übertragen. Der Nutzer des dritten Computersystems kann die Attribute also lesen, ohne sie jedoch verändern zu können. Erst nach Freigabe durch den Nutzer werden die Attribute von dem dritten Computersystem an das zweite Computersystem weitergeleitet.

Nach einer Ausführungsform der Erfindung kann der Nutzer die Attribute vor deren Weiterleitung durch weitere Daten ergänzen.

Nach einer Ausführungsform der Erfindung hat das erste Computersystem mehrere Zertifikate mit unterschiedlichen Leserechten aufweist, wobei das erste Computersystem aufgrund des Empfangs der Attributspezifizierung zumindest eines der Zertifikate auswählt, welches die zum Lesen der in der Attributspezifizierung spezifizierten Attribute ausreichenden Leserechte. Aufgrund des Empfangs der Attributspezifikation wählt das erste Computersystem eines oder mehrere dieser Zertifikate aus, um die entsprechenden Attribute aus dem ID-Token oder mehreren verschiedenen ID-Token auszulesen.

Nach einer Ausführungsform der Erfindung hat das dritte Computersystem zumindest einen Konfigurationsdatensatz, welcher eine externe Datenquelle zur Abfrage eines weiteren Attributs von dem dritten Computersystem über das Netzwerk spezifiziert.

Nach einer Ausführungsform der Erfindung erfolgt die Abfrage des weiteren Attributs, nachdem das zumindest eine Attribut aus dem ID-Token ausgelesen worden ist, und nachdem das dritte Computersystem das zumindest eine Attribut von dem ersten Computersystem empfangen hat, wobei die Abfrage das zumindest eine Attribut beinhaltet.

In einem weiteren Aspekt betrifft die Erfindung ein Computerprogrammprodukt, insbesondere ein digitales Speichermedium, mit ausführbaren Programminstruktionen zur Durchführung eines erfindungsgemäßen Verfahrens.

In einem weiteren Aspekt betrifft die Erfindung einen ID-Token mit einem geschützten Speicherbereich zur Speicherung von zumindest einem Attribut, mit Mitteln zur Authentifizierung eines dem ID-Token zugeordneten Nutzers gegenüber dem ID-Token, Mitteln zur Authentifizierung eines ersten Computersystems gegenüber dem ID-Token, Mitteln zum Aufbau einer geschützten Verbindung zu dem ersten Computersystem, über die das erste Computersystem das zumindest eine Attribut auslesen kann, wobei eine notwendige Voraussetzung für das Auslesen des zumindest einen Attributs aus dem ID-Token durch das erste Computersystem die erfolgreiche Authentifizierung des Nutzers und des ersten Computersystems gegenüber dem ID-Token ist.

Zusätzlich zu der Authentifizierung des ersten Computersystems gegenüber dem ID-Token, wie sie an sich zum Beispiel als so genannte Extended Access Control für maschinenlesbare Reisedokumente (machine-readable travel documents - MRTD) bekannt und von der internationalen Luftfahrtbehörde ICAO spezifiziert ist, muss sich also der Nutzer gegenüber dem ID-Token authentifizieren. Beispielsweise wird durch eine erfolgreiche Authentifizierung des Nutzers gegenüber dem ID-Token dieser freigeschaltet, sodass die weiteren Schritte, nämlich die Authentifizierung des ersten Computersystems gegenüber dem ID-Token und/oder der Aufbau einer geschützten Verbindung zum Auslesen der Attribute, ablaufen können.

Nach einer Ausführungsform der Erfindung hat der ID-Token Mittel für eine Ende-zu-Ende-Verschlüsselung. Dies ermöglicht es, die Verbindung zwischen dem ID-Token und dem ersten Computersystem über ein drittes Computersystem des Nutzers aufzubauen, da der Nutzer aufgrund der Ende-zu-Ende-Verschlüsselung keine Änderungen der über die Verbindung übertragenen Daten vornehmen kann.

In einem weiteren Aspekt betrifft die Erfindung ein erstes Computersystem mit Computersystem mit Mitteln zum Empfang einer Attributspezifikation über ein Netzwerk, wobei die Attributspezifikation zumindest ein Attribut spezifiziert, Mitteln zur Authentifizierung gegenüber einem ID-Token, Mitteln zum Lesen zumindest einen Attributs aus dem ID-Token über eine gesicherte Verbindung, wobei das Lesen des zumindest einen Attributs voraussetzt, dass sich ein dem ID-Token zugeordneter Nutzer gegenüber dem ID-Token authentifiziert hat.

Nach einer Ausführungsform der Erfindung kann das erste Computersystem Mittel zur Generierung einer Anforderung an den Nutzer zur Authentifizierung gegenüber dem ID-Token aufgrund des Empfangs der Attributspezifikation beinhalten. Nachdem das erste Computersystem die Attributspezifikation beispielsweise von dem zweiten Computersystem empfangen hat, sendet es daraufhin eine Anforderung an das dritte Computersystem des Nutzers, sodass der Nutzer dazu aufgefordert wird, sich gegenüber dem ID-Token zu authentifizieren. Nachdem die Authentifizierung des Nutzers gegenüber dem ID-Token erfolgreich durchgeführt worden ist, erhält das erste Computersystem von dem dritten Computersystem eine Bestätigung. Daraufhin authentifiziert sich das erste Computersystem gegenüber dem ID-Token und es wird eine sichere Verbindung zwischen dem ID-Token und dem ersten Computersystem mit einer Ende-zu-Ende-Verschlüsselung aufgebaut.

Nach einer Ausführungsform der Erfindung kann das erste Computersystem Mittel zum Signieren des zumindest einen Attributs beinhalten, wobei das signierte Attribut gesendet wird.

Nach einer Ausführungsform der Erfindung hat das erste Computersystem mehrere Zertifikate, die jeweils unterschiedliche Leserechte spezifizieren. Nach Empfang der Attributspezifikation wählt das erste Computersystem zumindest eines dieser Zertifikate mit den zum Lesen der spezifizierten Attribute ausreichenden Leserechten.

Ausführungsformen des erfindungsgemäßen ersten Computersystems sind besonders vorteilhaft, da sie in Kombination mit der Notwendigkeit der Authentifizierung des Nutzers gegenüber dem ID-Token einen Vertrauensanker für die unverfälschte digitale Identität des Nutzers bilden. Hierbei ist von besonderem Vorteil, dass dies keine vorherige Registrierung des Nutzers gegenüber dem Computersystem erfordert sowie auch keine zentrale Speicherung der die digitalen Identitäten bildenden Attribute der Nutzer.

Nach einer Ausführungsform der Erfindung empfängt das erste Computersystem zusammen mit der Attributspezifikation einen Identifikator des zweiten Computersystems. Mit Hilfe des Identifikators identifiziert das Computersystem das zweite Computersystem, welches die Identifikationsdienste in Anspruch nehmen möchte, um diese Dienstleistung gegenüber dem zweiten Computersystem zu vergebühren.

Nach einer Ausführungsform der Erfindung handelt es sich bei dem Computersystem um ein behördlich zertifiziertes Trust-Center, insbesondere ein Signaturgesetzkonformes Trust-Center.

Im Weiteren werden Ausführungsformen der Erfindung mit Bezugnahme auf die Zeichnungen näher erläutert. Es zeigen:
- Figur 1: ein Blockdiagramm einer ersten Ausführungsform erfindungsgemäßer Computersysteme,
- Figur 2: ein Flussdiagramm einer Ausführungsform eines erfindungsgemäßen Verfahrens,
- Figur 3: ein Blockdiagramm weiterer Ausführungsformen erfindungsgemäßer Computersysteme,
- Figur 4: ein UML-Diagramm einer weiteren Ausführungsform eines erfindungsgemäßen Verfahrens.

Elemente der nachfolgenden Ausführungsformen, die einander entsprechen, werden mit denselben Bezugszeichen gekennzeichnet.

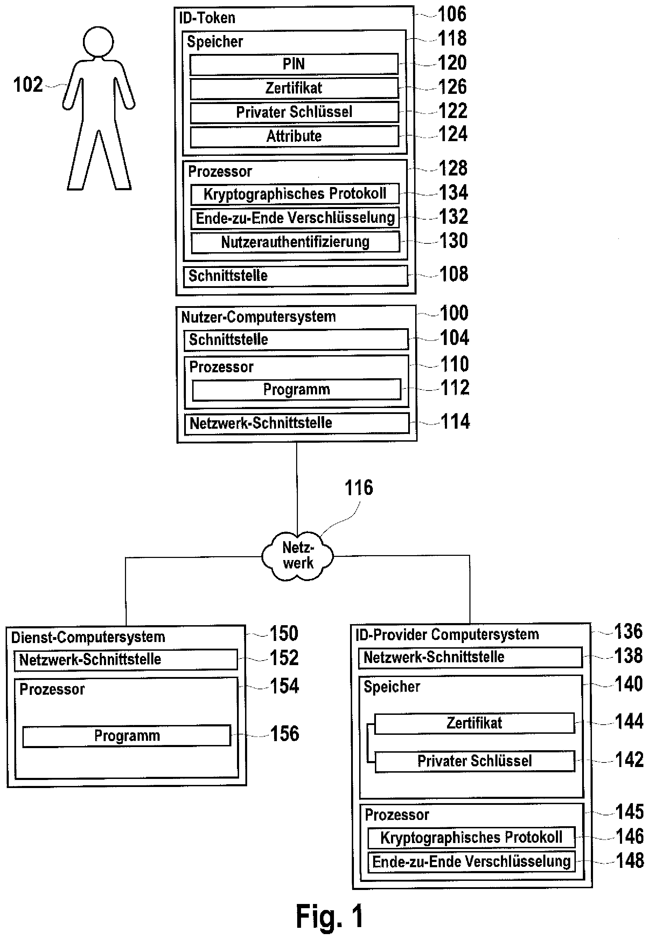

Die Figur 1 zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat eine Schnittstelle 104 zur Kommunikation mit einem ID-Token 106, der eine entsprechende Schnittstelle 108 aufweist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 ein oder mehrere Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall muss der Nutzer 102 aber nicht seine Identität gegenüber dem Dienst-Computersystem 150 offenbaren, sondern es reicht die Mitteilung, zum Beispiel nur eines der Attribute aus. Beispielsweise kann der Nutzer 102 über eines der Attribute einen Nachweis erbringen, dass er zu einer bestimmten Personengruppe gehört, die zugangsberechtigt für auf dem Dienst-Computersystem 150 zum Download bereitgehaltener Daten ist. Beispielsweise kann ein solches Kriterium ein Mindestalter des Nutzers 102 sein oder die Zugehörigkeit des Nutzers 102 zu einem Personenkreis, der auf bestimmte vertrauliche Daten eine Zugriffsberechtigung hat.

Zur Inanspruchnahme des von dem Dienst-Computersystem 150 zur Verfügung gestellten Dienstes wird wie folgt vorgegangen:
1. Authentifizierung des Nutzers 102 gegenüber dem ID-Token 106.
   Der Nutzer 102 authentifiziert sich gegenüber dem ID-Token 106. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
2. Authentifizierung des ID-Provider-Computersystems 136 gegenüber dem ID-Token 106.
   Hierzu wird eine Verbindung zwischen dem ID-Token 106 und dem ID-Provider-Computersystem 136 über das Nutzer-Computersystem 100 und das Netzwerk 116 hergestellt. Beispielsweise überträgt das ID-Provider-Computersystem 136 sein Zertifikat 144 über diese Verbindung an den ID-Token 106. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die Verbindung an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.
3. Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erhält das ID-Provider-Computersystem 136 eine Leseberechtigung zum Auslesen, eines, mehrerer oder aller der in dem geschützten Speicherbereich 124 gespeicherten Attribute. Aufgrund eines entsprechenden Lesekommandos, welches das ID-Provider-Computersystem 136 über die Verbindung an den ID-Token 106 sendet, werden die angeforderten Attribute aus dem geschützten Speicherbereich 124 ausgelesen und durch Ausführung der Programminstruktionen 132 verschlüsselt. Die verschlüsselten Attribute werden über die Verbindung an das ID-Provider-Computersystem 136 übertragen und dort durch Ausführung der Programminstruktionen 148 entschlüsselt. Dadurch erhält das ID-Provider-Computersystem 136 Kenntnis der aus dem ID-Token 106 ausgelesenen Attribute.

Diese Attribute werden von dem ID-Provider-Computersystem mit Hilfe seines Zertifikats 144 signiert und über das Nutzer-Computersystem 100 oder direkt an das Dienst-Computersystem 150 übertragen. Dadurch wird das Dienst-Computersystem 150 über die aus dem ID-Token 106 ausgelesenen Attribute in Kenntnis gesetzt, sodass das Dienst-Computersystem 150 diese Attribute anhand der vorgegebenen ein oder mehreren Kriterien prüfen kann, um danach ggf. den von dem Benutzer 102 angeforderten Dienst zu erbringen.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass die ihm von dem ID-Provider-Computersystem 136 mitgeteilten Attribute des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist der ID-Token 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Von besonderem Vorteil ist die Nutzbarmachung des ID-Tokens 106 für zum Beispiel E-Commerce und E-Government-Anwendungen, und zwar medienbruchfrei und rechtssicher aufgrund des durch die Notwendigkeit der Authentifizierung des Nutzers 102 und des ID-Provider-Computersystems 136 gegenüber dem ID-Token 106 gebildeten Vertrauensankers. Von besonderem Vorteil ist ferner, dass eine zentrale Speicherung der Attribute verschiedener Nutzer 102 nicht erforderlich ist, sodass die im Stand der Technik bestehenden Datenschutzprobleme hiermit gelöst sind. Was die Bequemlichkeit der Anwendung des Verfahrens betrifft, ist von besonderem Vorteil, dass eine vorherige Registrierung des Nutzers 102 zur Inanspruchnahme des ID-Provider-Computersystems 136 nicht erforderlich ist.

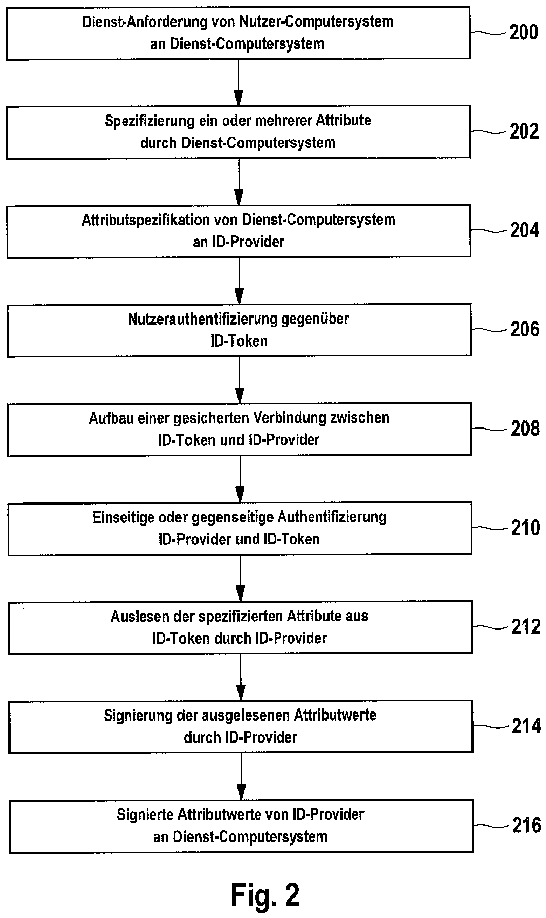

Die Figur 2 zeigt eine Ausführungsform eines erfindungsgemäßen Verfahrens. In dem Schritt 200 wird eine Dienst-Anforderung von dem Nutzer-Computersystem an das Dienst-Computersystem gesendet. Beispielsweise startet der Nutzer hierzu einen Internet-Browser des Nutzer-Computersystems und gibt eine URL zum Aufruf einer Webseite des Dienst-Computersystems ein. In die aufgerufene Webseite gibt der Nutzer dann seine Dienst-Anforderung ein, zum Beispiel zur Bestellung oder Auftragserteilung für einen Dienst oder ein Produkt.

In dem Schritt 202 spezifiziert das Dienst-Computersystem 150 daraufhin ein oder mehrere Attribute, welche es benötigt, um die Berechtigung des Nutzers für die Dienst-Anforderung zu prüfen. Insbesondere kann das Dienst-Computersystem solche Attribute spezifizieren, welche die digitale Identität des Nutzers 102 bestimmen. Diese Spezifizierung der Attribute durch das Dienst-Computersystem 150 kann fest vorgegeben sein oder je nach der Dienst-Anforderung im Einzelfall durch das Dienst-Computersystem 150 anhand vorgegebener Regeln bestimmt werden.

In dem Schritt 204 wird die Attributspezifikation, d.h. die in dem Schritt 202 erfolgte Spezifizierung der ein oder mehreren der Attribute, von dem Dienst-Computersystem an das ID-Provider-Computersystem übertragen, und zwar entweder direkt oder über das Nutzer-Computersystem.

Um dem ID-Provider-Computersystem die Möglichkeit zu geben, Attribute aus seinem ID-Token auszulesen, authentifiziert sich der Nutzer in dem Schritt 206 gegenüber dem ID-Token.

In dem Schritt 208 wird eine Verbindung zwischen dem ID-Token und dem ID-Provider-Computersystem aufgebaut. Hierbei handelt es sich vorzugsweise um eine gesicherte Verbindung, beispielsweise nach einem so genannten Secure Messaging-Verfahren.

In dem Schritt 210 erfolgt zumindest eine Authentifizierung des ID-Provider-Computersystems gegenüber dem ID-Token über die in dem Schritt 208 aufgebaute Verbindung. Zusätzlich kann eine Authentifizierung auch des ID-Tokens gegenüber dem ID-Provider-Computersystem vorgesehen sein.

Nachdem sowohl der Nutzer als auch das ID-Provider-Computersystem erfolgreich gegenüber dem ID-Token authentifiziert worden sind, erhält das ID-Provider-Computersystem von dem ID-Token die Zugriffsberechtigung zum Auslesen der Attribute. In dem Schritt 212 sendet das ID-Provider-Computersystem ein oder mehrere Lesekommandos zum Auslesen der gemäß Attributspezifikation erforderlichen Attribute aus dem ID-Token. Die Attribute werden dann mittels Ende-zu-Ende-Verschlüsselung über die gesicherte Verbindung an das ID-Provider-Computersystem übertragen und dort entschlüsselt.

Die ausgelesenen Attributwerte werden in dem Schritt 214 von dem ID-Provider-Computersystem signiert. In dem Schritt 216 sendet das ID-Provider-Computersystem die signierten Attributwerte über das Netzwerk. Die signierten Attributwerte erreichen das Dienst-Computersystem entweder direkt oder über das Nutzer-Computersystem. Im letzteren Fall kann der Nutzer die Möglichkeit haben, die signierten Attributwerte zur Kenntnis zu nehmen und/oder durch weitere Daten zu ergänzen. Es kann vorgesehen sein, dass die signierten Attributwerte gegebenenfalls mit den ergänzten Daten erst nach Freigabe durch den Nutzer von dem Nutzer-Computersystem an das Dienst-Computersystem weitergeleitet werden. Hierdurch ist größtmögliche Transparenz für den Nutzer hinsichtlich der von dem ID-Provider-Computersystem an das Dienst-Computersystem gesendeten Attribute hergestellt.

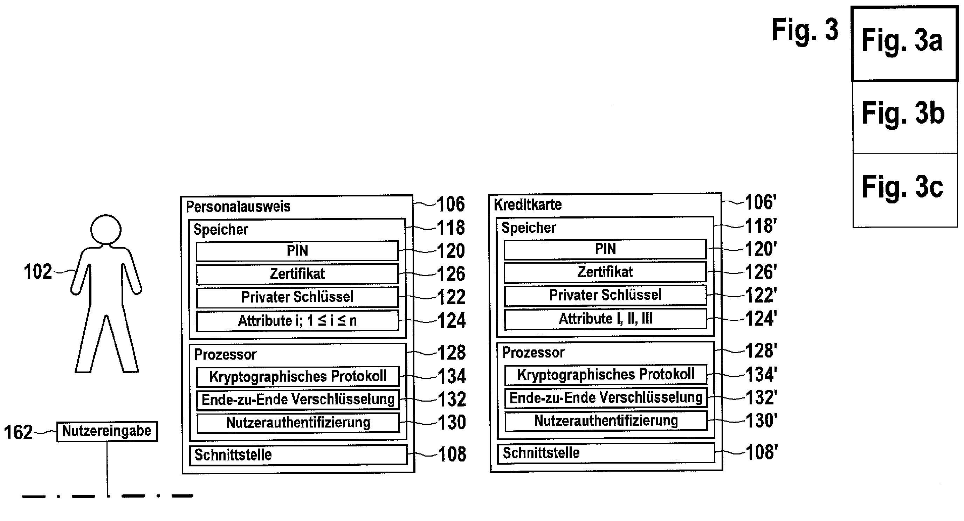

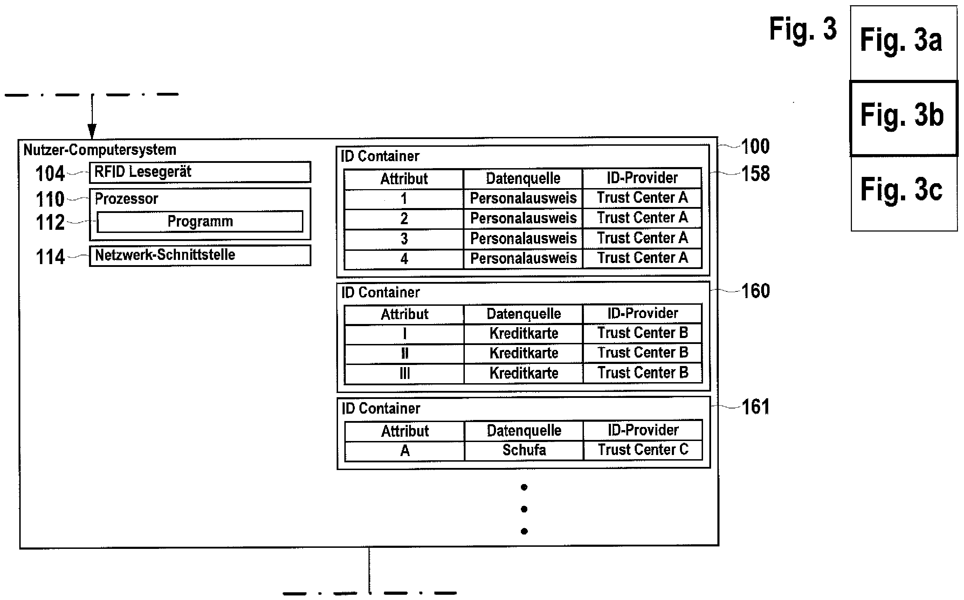

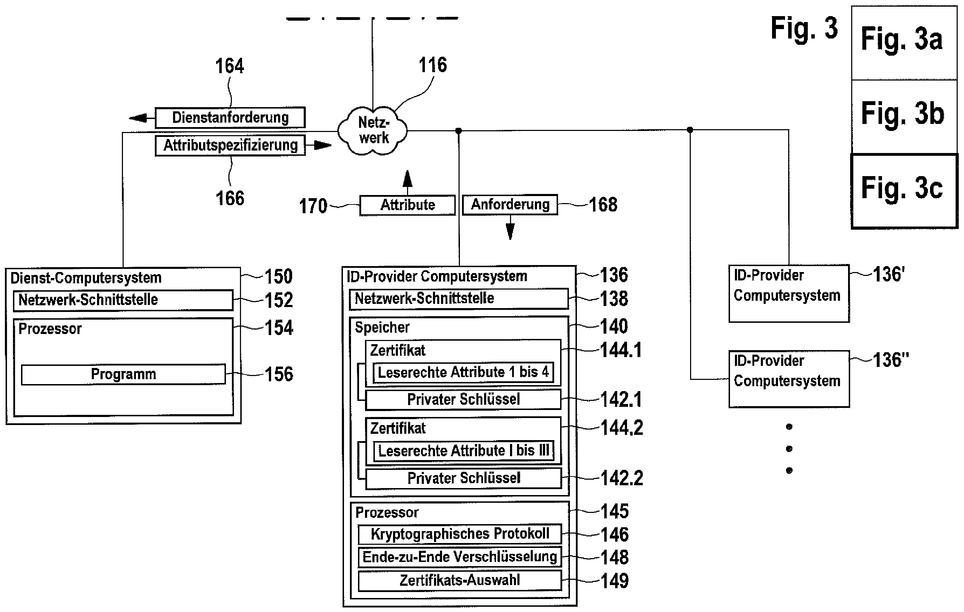

Die Figur 3 zeigt weitere Ausführungsformen eines erfindungsgemäßen ID-Tokens und erfindungsgemäße Computersysteme. Bei der Ausführungsform der Figur 3 ist der ID-Token 106 als Dokument ausgebildet, wie zum Beispiel als papier- und/oder kunststoffbasiertes Dokument mit einem integrierten elektronischen Schaltkreis, durch den die Schnittstelle 108, der Speicher 118 und der Prozessor 128 gebildet werden. Bei dem integrierten elektronischen Schaltkreis kann es sich beispielsweise um ein so genanntes Funketikett handeln, welches auch als RFID-Tag oder RFID-Label bezeichnet wird. Die Schnittstelle 108 kann aber auch kontaktbehaftet oder als so genanntes Dual Mode Interface ausgebildet sein.

Insbesondere kann es sich bei dem Dokument 106 um ein Wert- oder Sicherheitsdokument handeln, wie zum Beispiel um ein maschinenlesbares Reisedokument (MRTD), wie zum Beispiel einen elektronischen Reisepass oder einen elektronischen Personalausweis, oder um ein Zahlungsmittel, wie zum Beispiel eine Kreditkarte.

In dem geschützten Speicherbereich 124 sind bei der hier betrachteten Ausführungsform die Attribute i gespeichert, wobei 1 ≤ i ≤ n ist. Im Weiteren wird ohne Beschränktheit der Allgemeinheit davon ausgegangen, dass es sich bei dem in der Figur 3 exemplarisch gezeigten ID-Token 106 um einen elektronischen Personalausweis handelt. Beispielsweise handelt es sich bei dem Attribut i = 1 um den Namen, bei dem Attribut i = 2 um den Vornamen, bei dem Attribut i = 3 um die Adresse und bei dem Attribut i = 4 um das Geburtsdatum, etc.

Die Schnittstelle 104 des Nutzer-Computersystems 100 kann bei der hier betrachteten Ausführungsform als RFID-Lesegerät ausgebildet sein, welches einen integralen Bestandteil des Nutzer-Computersystems bilden kann oder als separate Komponente an dieses angeschlossen sein kann.

Der Nutzer 102 verfügt über einen oder mehrere weitere ID-Token, die prinzipiell gleich aufgebaut sind, wie z.B. einen ID-Token 106', bei dem es sich um eine Kreditkarte handelt.

In dem Nutzer-Computersystem 100 können mehrere Konfigurationsdatensätze 158, 160,... gespeichert sein. Jeder der Konfigurationsdatensätze gibt für eine bestimmte Attributmenge eine Datenquelle und ein ID-Provider-Computersystem an, welches die spezifizierte Datenquelle lesen kann. Bei dieser Ausführungsform kann das Nutzer-Computersystem 100 über das Netzwerk 116 verschiedene ID-Provider-Computersysteme 136, 136', ... ansprechen, die jeweils zu verschiedenen so genannten Trust-Centern gehören können. Beispielsweise gehört das ID-Provider-Computersystem 136 zu dem Trust-Center A und das im Prinzip gleich strukturierte ID-Provider-Computersystem 136' zu einem anderen Trust-Center B.

In dem Konfigurationsdatensatz 158, der auch als ID-Container bezeichnet wird, ist die Attributmenge der Attribute i = 1 bis i = 4 definiert. Diesen Attributen ist jeweils die Datenquelle "Personalausweis", d.h. der ID-Token 106 zugeordnet, sowie das Trust-Center A, d.h. das ID-Provider-Computersystem 136. Dieses kann beispielsweise in Form seiner URL in dem Konfigurationsdatensatz 158 spezifiziert sein.

In dem Konfigurationsdatensatz 116 ist dagegen eine Attributmenge I, II und III definiert. Als Datenquelle für diese Attribute ist jeweils die Kreditkarte, d.h. der ID-Token 106', angegeben. Der ID-Token 106' hat einen geschützten Speicherbereich 124', in dem die Attribute I, II, III, ... gespeichert sind. Bei dem Attribut I kann es sich zum Beispiel um den Namen des Inhabers der Kreditkarte, bei dem Attribut II um die Kreditkartennummer und bei dem Attribut III um die Gültigkeitsdauer der Kreditkarte handeln, etc.

Als ID-Provider-Computersystem ist in dem Konfigurationsdatensatz 160 das ID-Provider-Computersystem 136' des Trust-Centers B angegeben.

Alternativ zu der in der Figur 3 gezeigten Ausführungsform können in demselben Konfigurationsdatensatz für verschiedene Attribute auch verschiedene Datenquellen und/oder verschiedene ID-Provider-Computersysteme angegeben sein.

In der Ausführungsform der Figur 3 kann jedes der ID-Provider-Computersysteme 136, 136',... jeweils mehrere Zertifikate haben.

Beispielsweise sind in dem Speicher 140 des ID-Provider-Computersystems 136, der in der Figur 3 exemplarisch gezeigt ist, mehrere Zertifikate, wie zum Beispiel die Zertifikate 144.1 und 144.2 mit den jeweils zugeordneten privaten Schlüsseln 142.1 und 142.2 gespeichert. In dem Zertifikat 144.1 sind Leserechte des ID-Provider-Computersystems 136 auf die Attribute i = 1 bis i = 4 definiert, wohingegen in dem Zertifikat 144.2 Leserechte auf die Attribute I bis III definiert sind.

Zur Inanspruchnahme eines von dem Dienst-Computersystem 150 angebotenen Dienstes tätigt der Nutzer 102 zunächst eine Nutzereingabe 162 in das Nutzer-Computersystem 100, um beispielsweise in eine Webseite des Dienst-Computersystems 150 seine Anforderung für den gewünschten Dienst einzugeben. Diese Dienst-Anforderung 164 wird von dem Nutzer-Computersystem 100 über das Netzwerk 116 an das Dienst-Computersystem 150 übertragen. Das Dienst-Computersystem 150 antwortet darauf mit einer Attributspezifizierung 166, d.h. mit einer Spezifizierung derjenigen Attribute, welche das Dienst-Computersystem 150 zur Bearbeitung der Dienst-Anforderung 164 von dem Nutzer 102 benötigt. Die Attributspezifizierung kann beispielsweise in Form der Attributnamen erfolgen, wie zum Beispiel "Name", "Vorname", "Adresse", "Kreditkartennummer".

Der Empfang der Attributspezifizierung 166 wird dem Nutzer 102 durch das Nutzer-Computersystem 100 signalisiert. Der Nutzer 102 kann daraufhin einen oder erforderlichenfalls mehrere der Konfigurationsdatensätze 158, 160, ... auswählen, die jeweils Attributmengen definieren, welche die Attribute gemäß der Attributspezifizierung 166 zumindest als Teilmenge beinhalten.

Verlangt der Attributspezifizierung 166 beispielsweise lediglich die Mitteilung des Namens, des Vornamens und der Adresse des Nutzers 102, so kann der Nutzer 102 den Konfigurationsdatensatz 158 auswählen. Wird dagegen zusätzlich in der Attributspezifizierung 166 die Kreditkartennummer spezifiziert, so kann der Nutzer 102 zusätzlich den Konfigurationsdatensatz 160 auswählen. Dieser Vorgang kann auch vollautomatisch durch das Nutzer-Computersystem 100, beispielsweise durch Ausführung der Programminstruktionen 112, durchgeführt werden.

Im Weiteren wird zunächst davon ausgegangen, dass nur eine der Konfigurationsdatensätze, wie zum Beispiel der Konfigurationsdatensatz 158, aufgrund der Attributspezifizierung 166 ausgewählt wird.

Das Nutzer-Computersystem 100 sendet daraufhin eine Anforderung 168 an das oder die in dem gewählten Konfigurationsdatensatz angegebene ID-Provider-Computersysteme, in dem betrachteten Beispiel an das ID-Provider-Computersystem 136 des Trust-Centers A. Diese Anforderung 168 beinhaltet eine Angabe der von dem ID-Provider-Computersystem 136 aus der in dem Konfigurationsdatensatz 158 angegebenen Datenquelle auszulesenden Attribute gemäß der Attributspezifizierung 166.

Das ID-Provider-Computersystem 136 wählt daraufhin eines oder mehrerer seiner Zertifikate aus, welche die zum Lesen dieser Attribute erforderlichen Leserechte aufweisen. Wenn beispielsweise die Attribute i = 1 bis 3 aus dem Personalausweis gelesen werden sollen, so wählt das ID-Provider-Computersystem 136 sein Zertifikat 144.1 aus, welches die dafür erforderlichen Leserechte definiert. Diese Auswahl des Zertifikats wird durch Ausführung der Programminstruktionen 149 durchgeführt.

Daraufhin wird die Ausführung des kryptographischen Protokolls gestartet. Beispielsweise sendet das ID-Provider-Computersystem 136 hierzu eine Antwort an das Nutzer-Computersystem 100. Das Nutzer-Computersystem 100 fordert daraufhin den Nutzer 102 zu seiner Authentifizierung gegenüber der spezifizierten Datenquelle, d.h. hier gegenüber dem Personalausweis, auf.

Der Nutzer 102 bringt daraufhin seinen Personalausweis, d.h. den ID-Token 106, in den Bereich des RFID-Lesegeräts 104, und gibt beispielsweise seine PIN zu seiner Authentifizierung ein. Durch die erfolgreiche Authentifizierung des Nutzers 102 gegenüber dem ID-Token 106 wird dieser für die Durchführung des kryptographischen Protokolls, d.h. für die Durchführung der Programminstruktionen 134 freigeschaltet. Im Weiteren authentifiziert sich das ID-Provider-Computersystem 136 gegenüber dem ID-Token 106 mit Hilfe des ausgewählten Zertifikats 144.1, beispielsweise mit Hilfe eines Challenge-Response-Verfahrens. Diese Authentifizierung kann auch gegenseitig sein. Nach erfolgreicher Authentifizierung des ID-Provider-Computersystems 136 gegenüber dem ID-Token 106 richtet das ID-Provider-Computersystem eine Leseanforderung zum Lesen der erforderlichen Attribute an das Nutzer-Computersystem 100, welche dieses über das RFID-Lesegerät 104 an den ID-Token 106 weiterleitet. Der ID-Token 106 prüft anhand des Zertifikats 144.1, ob das ID-Provider-Computersystem 136 die dafür erforderlichen Leserechte hat. Wenn dies der Fall ist, werden die gewünschten Attribute aus dem geschützten Speicherbereich 124 ausgelesen und mittels Ende-zu-Ende-Verschlüsselung an das ID-Provider-Computersystem über das Nutzer-Computersystem 100 übertragen.

Das ID-Provider-Computersystem 136 sendet dann eine Antwort 170, die die ausgelesenen Attribute beinhaltet, über das Netzwerk 116 an das Dienst-Computersystem 150. Die Antwort 170 ist mit dem Zertifikat 144.1 digital signiert.

Alternativ sendet das ID-Provider-Computersystem 136 die Antwort 170 an das Nutzer-Computersystem 100. Der Nutzer 102 erhält daraufhin die Möglichkeit, die in der Antwort 170 beinhalteten Attribute zu lesen und zu entscheiden, ob er diese Attribute wirklich an das Dienst-Computersystem 150 weiterleiten möchte oder nicht. Erst nach Eingabe eines Freigabekommandos des Nutzers 102 in das Nutzer-Computersystem 100 wird dann die Antwort 170 an das Dienst-Computersystem 150 weitergeleitet. Bei dieser Ausführungsform ist es ferner möglich, dass der Nutzer 102 die Antwort 170 um weitere Daten ergänzt.

Wenn mehrere ID-Provider-Computersysteme 136, 136', ... involviert sind, so können die einzelnen Antworten der ID-Provider-Computersysteme durch das Nutzer-Computersystem 100 in einer einzigen Antwort, die sämtliche der Attribute gemäß Attributspezifizierung 166 beinhalten, zusammengefasst werden, welche dann von dem Nutzer-Computersystem 100 an das Dienst-Computersystem 150 gesendet wird.

Nach einer Ausführungsform der Erfindung kann der Nutzer 102 anlässlich der Dienstanforderung 164 ein oder mehrerer seiner Attribute gegenüber dem Dienst-Computersystem 150 offenbaren, beispielsweise indem diese Attribute des Nutzers als Teil der Dienstanforderung 164 über das Netzwerk 116 an das Dienst-Computersystem übertragen werden. Insbesondere kann der Nutzer 102 diese Attribute in die Webseite des Dienst-Computersystems 150 eingeben. Die Richtigkeit dieser Attribute wird dann durch die Antwort 170 bestätigt, d.h. das Dienst-Computersystem 150 kann die von dem Nutzer 102 empfangenen Attribute mit den von dem ID-Provider Computersystem 136 aus dem ID-Token 106 ausgelesenen Attribute vergleichen und auf Übereinstimmung prüfen.

Nach einer weiteren Ausführungsform der Erfindung kann auch zumindest ein weiteres Attribut in der Attributspezifizierung 166 angegeben sein, welches nicht auf einem der ID-Token des Nutzers 102 gespeichert ist, sondern von einer externen Datenquelle abfragbar ist. Hierbei kann es sich z.B. um ein Attribut betreffend die Kreditwürdigkeit des Nutzers 102 handeln. Das Nutzer-Computersystem 100 kann hierzu einen weiteren Konfigurationsdatensatz 161 beinhalten, welcher für das Attribut A - z.B. die Kreditwürdigkeit - die Angabe einer Datenquelle und eines ID-Provider Computersystems beinhaltet. Bei der Datenquelle kann es sich um eine Online Auskunftei, wie z.B. Schufa, Dun & Bradstreet oder dergleichen handeln. Als ID-Provider Computersystem ist beispielsweise ein Trust Center C angegeben, wie in der Ausführungsform der Fig. 3. Die Datenquelle kann sich hier in dem Trust Center C befinden.

Um das Attribut A abzufragen richtet also das Nutzer-Computersystem 100 eine entsprechende Anforderung (in der Fig. 3 nicht gezeigt) an das Trust Center C, d.h. das ID-Provider Computersystem 136". Dieses liefert daraufhin das Attribut A, welches das Nutzer-Computersystem 100 zusammen mit den weiteren Attributen, die aus dem oder den ID-Token des Nutzers 102 ausgelesen wurden, an das Dienst-Computersystem 150 weiterleitet.

Vorzugsweise erfolgt die Abfrage des Attributs A nachdem die die digitale Identität des Nutzer 102 betreffenden Attribute bereits aus einem der ID-Token des Nutzers 102 abgefragt worden sind, und beispielsweise als signierte Antwort 170 von dem Nutzer-Computersystem 100 empfangen worden sind. Die Abfrage des Attributs A durch das Nutzer-Computersystem 100 von dem ID-Provider Computersystem 136" beinhaltet dann die signierte Antwort 170, so dass das ID-Provider Computersystem 136" hinsichtlich der Identität des Nutzers 102 ein sichere Information hat.

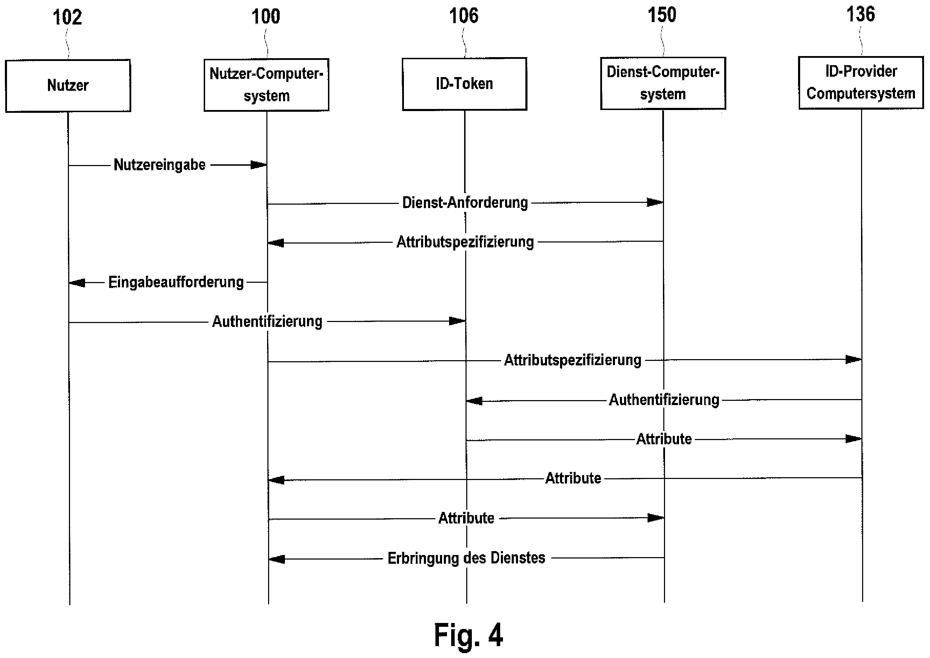

Die Figur 4 zeigt eine weitere Ausführungsform eines erfindungsgemäßen Verfahrens. Durch eine Nutzereingabe eines Nutzers 102 in ein Nutzer-Computersystem 100 spezifiziert der Nutzer 102 einen Dienst eines Dienst-Computersystems, welchen er oder sie in Anspruch nehmen möchte. Dies erfolgt beispielsweise durch Aufruf einer Internetseite des Dienst-Computersystems und einer Auswahl eines der dort angebotenen Dienste. Die Dienst-Anforderung des Nutzers 102 wird von dem Nutzer-Computersystem 100 an das Dienst-Computersystem 150 übertragen.

Das Dienst-Computersystem 150 antwortet auf die Dienst-Anforderung mit einer Attributspezifizierung, d.h. beispielsweise einer Liste von Attributnamen. Nach Empfang der Attributspezifizierung fordert das Nutzer-Computersystem 100 den Nutzer 102, beispielsweise durch eine Eingabeaufforderung, zur Authentifizierung gegenüber dem ID-Token 106 auf.

Der Nutzer 102 authentifiziert sich daraufhin gegenüber dem ID-Token 106, beispielsweise durch Eingabe seiner PIN. Nach erfolgreicher Authentifizierung wird die Attributspezifizierung von dem Nutzer-Computersystem 100 an ein ID-Provider-Computersystem 136 weitergeleitet. Dieses authentifiziert sich daraufhin gegenüber dem ID-Token 106 und richtet eine Leseanforderung zum Lesen der Attribute gemäß der Attributspezifizierung an den ID-Token 106.

Unter der Voraussetzung der vorherigen erfolgreichen Authentifizierung des Nutzers 102 und des ID-Provider-Computersystems 136 antwortet der ID-Token 106 auf die Leseanforderung mit den gewünschten Attributen. Das ID-Provider-Computersystem 136 signiert die Attribute und sendet die signierten Attribute an das Nutzer-Computersystem 100. Nach Freigabe durch den Nutzer 102 werden die signierten Attribute dann an das Dienst-Computersystem 150 übertragen, welches dann ggf. den gewünschten Dienst erbringen kann.

### Bezugszeichenliste

- 100: Nutzer-Computersystem
- 102: Nutzer
- 104: Schnittstelle
- 106: ID-Token
- 108: Schnittstelle
- 110: Prozessor
- 112: Programminstruktionen
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programminstruktionen
- 148: Programminstruktionen
- 149: Programminstruktionen
- 150: Dienst-Computersystem
- 152: Netzwerk-Schnittstelle
- 154: Prozessor
- 156: Programminstruktionen
- 158: Konfigurationsdatensatz
- 160: Konfigurationsdatensatz
- 161: Konfigurationsdatensatz
- 162: Nutzereingabe
- 164: Dienst-Anforderung
- 166: Attributspezifizierung
- 168: Anforderung
- 170: Antwort

## Patentansprüche

1. Verfahren zum Lesen zumindest eines in einem ID-Token (106, 106') gespeicherten Attributs, wobei der ID-Token einem Nutzer (102) zugeordnet ist, mit folgenden Schritten:
- Authentifizierung des Nutzers gegenüber dem ID-Token,
- Authentifizierung eines ersten Computersystems (136) gegenüber dem ID-Token über ein Netzwerk (116),
- nach erfolgreicher Authentifizierung des Nutzers und des ersten Computersystems gegenüber dem ID-Token, Lesezugriff des ersten Computersystems auf das zumindest eine in dem ID-Token gespeicherte Attribut über das Netzwerk (116), mit folgenden weiteren Schritten:
i. Signierung des zumindest einen aus dem ID-Token gelesenen Attributs durch das erste Computersystem,
ii. Übertragung des signierten Attributs von dem ersten Computersystem an ein zweites Computersystem.

2. Verfahren nach Anspruch 1, wobei die Authentifizierung des ersten Computersystems gegenüber dem ID-Token mit Hilfe eines Zertifikats (144) des ersten Computersystems erfolgt, wobei das Zertifikat eine Angabe derjenigen in dem ID-Token gespeicherten Attribute beinhaltet, für welche das erste Computersystem für den Lesezugriff berechtigt ist.

3. Verfahren nach Anspruch 2, wobei der ID-Token die Leseberechtigung des ersten Computersystems für den Lesezugriff auf zumindest eines der Attribute mit Hilfe des Zertifikats überprüft.

4. Verfahren nach einem der vorhergehenden Ansprüche, mit folgenden weiteren Schritten:
- Senden einer Anforderung (164) von einem dritten Computersystem (100) an das zweite Computersystem,
- Spezifizierung eines oder mehrerer Attribute durch das zweite Computersystem,
- Senden der Attributspezifizierung (166) von dem zweiten Computersystem an das erste Computersystem,
wobei der Lesezugriff des ersten Computersystems erfolgt, um die in der Attributspezifizierung spezifizierten ein oder mehrere Attribute aus dem ID-Token auszulesen.

5. Verfahren nach Anspruch 4, wobei die Anforderung (164) einen Identifikator zur Identifizierung des ersten Computersystems durch das zweite Computersystem beinhaltet, und wobei die Übertragung der Attributspezifikation von dem zweiten Computersystem an das erste Computersystem ohne Zwischenschaltung des dritten Computersystems erfolgt.

6. Verfahren nach Anspruch 4, wobei das dritte Computersystem mehrere vordefinierte Konfigurationsdatensätze (158, 160,...) aufweist, wobei jeder der Konfigurationsdatensätze eine Teilmenge der Attribute, zumindest eine Datenquelle und ein erstes Computersystem aus einer Menge von ersten Computersystemen (136, 136',...) spezifiziert, wobei die Attributspezifikation von dem zweiten Computersystem zunächst an das dritte Computersystem übertragen wird, sodass mittels des dritten Computersystems zumindest einer der Konfigurationsdatensätze ausgewählt wird, der eine Teilmenge der Attribute spezifiziert, welche das zumindest eine in der Attributspezifikation spezifizierte Attribut beinhaltet, und wobei das dritte Computersystem die Attributspezifikation an das erste Computersystem weiterleitet, und wobei eine Verbindung zwischen dem ersten Computersystem und dem mit dem durch die Angabe der Datenquelle in dem ausgewählten Konfigurationsdatensatz spezifizierten ID-Token über das dritte Computersystem aufgebaut wird.

7. Verfahren nach einem der vorhergehenden Ansprüche, wobei das zumindest eine von dem ersten Computersystem aus dem ID-Token gelesene Attribut an das dritte Computersystem gesendet wird, von wo es nach Freigabe durch den Nutzer an das zweite Computersystem weitergeleitet wird.

8. Verfahren nach einem der vorhergehenden Ansprüche, wobei das dritte Computersystem zumindest einen Konfigurationsdatensatz (161) hat, welcher eine externe Datenquelle zur Abfrage eines weiteren Attributs (A) von dem dritten Computersystem über das Netzwerk (116) spezifiziert, wobei die Abfrage des weiteren Attributs erfolgt, nachdem das zumindest eine Attribut aus dem ID-Token ausgelesen worden ist, und nachdem das dritte Computersystem das zumindest eine signierte Attribut von dem ersten Computersystem empfangen hat, wobei die Abfrage das zumindest eine signierte Attribut beinhaltet.

9. Computerprogrammprodukt mit von einem Computersystem ausführbaren Instruktionen zur Durchführung eines Verfahrens nach einem der vorhergehenden Ansprüche.

10. ID-Token mit
- einem geschützten Speicherbereich (124) zur Speicherung von zumindest einem Attribut,
- Mitteln (120, 130) zur Authentifizierung eines dem ID-Token zugeordneten Nutzers (102) gegenüber dem ID-Token,
- Mitteln (134) zur Authentifizierung eines ersten Computersystems (136) gegenüber dem ID-Token,
- Mitteln (132) zum Aufbau einer geschützten Verbindung über ein Netzwerk (116) zu dem ersten Computersystem, über die das erste Computersystem das zumindest eine Attribut auslesen kann,
wobei eine notwendige Voraussetzung für das Auslesen des zumindest einen Attributs aus dem ID-Token durch das erste Computersystem die erfolgreiche Authentifizierung des Nutzers und des ersten Computersystems gegenüber dem ID-Token ist, und wobei das zumindest eine aus dem ID-Token ausgelesene Attribut durch das erste Computersystem signiert wird und das signierte Attribut von dem ersten Computersystem an ein zweites Computersystem übertragen wird.

11. ID-Token nach Anspruch 10, mit Mitteln zur Ende-zu-Ende-Verschlüsselung der Verbindung für eine geschützte Übertragung des zumindest einen der Attribute zu dem ersten Computersystem.

12. ID-Token nach Anspruch 10 oder 11, wobei es sich um ein elektronisches Gerät, insbesondere einen USB-Stick, oder ein Dokument, insbesondere ein Wert- oder Sicherheitsdokument, handelt.

13. Computersystem mit
- Mitteln (138) zum Empfang einer Attributspezifizierung (166) über ein Netzwerk (116), wobei die Attributspezifikation zumindest ein Attribut spezifiziert,
- Mitteln (142, 144, 146) zur Authentifizierung gegenüber einem ID-Token (106) über das Netzwerk (116),
- Mitteln zum Lesen zumindest einen Attributs aus dem ID-Token über eine geschützte Verbindung über das Netzwerk (116),
wobei das Lesen des zumindest einen Attributs voraussetzt, dass sich ein dem ID-Token zugeordneter Nutzer und das Computersystem gegenüber dem ID-Token authentifiziert haben,
- Mitteln zur Signierung des aus dem ID-Token gelesenen Attributs,
- Mitteln zur Übertragung des signierten Attributs an ein zweites Computersystem.

14. Computersystem nach Anspruch 13, wobei die Mittel (138) zum Empfang der Attributspezifikation von einem zweiten Computersystem ausgebildet sind, und mit Mitteln (138) zum Senden des zumindest einen aus dem ID-Token gelesenen Attributs an ein drittes Computersystem (100) zur Weiterleitung an das zweite Computersystem.

15. Computersystem nach einem der Ansprüche 13 bis 14, mit mehreren der Zertifikate (144.1; 144.2) unterschiedlicher Leserechte, wobei das Computersystem dazu ausgebildet ist, aufgrund des Empfangs der Attributspezifizierung zumindest eines der Zertifikate auszuwählen, welches die zum Lesen der in der Attributspezifizierung spezifizierten Attribute ausreichenden Leserechte aufweist.

## Claims

1. A method for reading at least one attribute stored in an ID token (106, 106'), wherein the ID token is assigned to a user (102), said method comprising the following steps:
- authenticating the user to the ID token,
- authenticating a first computer system (136) to the ID token via a network (116),
- following successful authentication of the user and the first computer system to the ID token, granting the first computer system read access to the at least one attribute stored in the ID token via the network (116), comprising the following further steps:
i. signing the at least one attribute read from the ID token by the first computer system,
ii. transmitting the signed attribute from the first computer system to a second computer system.

2. The method according to claim 1, wherein the first computer system is authenticated to the ID token using a certificate (144) of the first computer system, wherein the certificate contains an indication of those attributes stored in the ID token for which the first computer system is authorised for the read access.

3. The method according to claim 2, wherein the ID token checks the read authorisation of the first computer system for the read access to at least one of the attributes using the certificate.

4. The method according to any one of the preceding claims, having the following further steps:
- sending a request (164) from a third computer system (100) to the second computer system,
- specifying one or more attributes by the second computer system,
- sending the attribute specification (166) from the second computer system to the first computer system,
wherein the read access by the first computer system is effected in order to read the one or more attributes specified in the attribute specification from the ID token.

5. The method according to claim 4, wherein the request (164) contains an identifier for identification of the first computer system by the second computer system, and wherein the attribute specification is transmitted from the second computer system to the first computer system without interposition of the third computer system.

6. The method according to claim 4, wherein the third computer system has a plurality of predefined configuration data records (158, 160, ...), wherein each of the configuration data records specifies a subset of the attributes, at least one data source and a first computer system from a set of first computer systems (136, 136', ...), wherein the attribute specification is transmitted from the second computer system to the third computer system first of all, so that the third computer system is used to select at least one of the configuration data records which specifies a subset of the attributes which contains the at least one attribute specified in the attribute specification, and wherein the third computer system forwards the attribute specification to the first computer system, and wherein a connection between the first computer system and the ID token specified by the indication of the data source in the selected configuration data record is set up via the third computer system.

7. The method according to any one of the preceding claims, wherein the at least one attribute read by the first computer system from the ID token is sent to the third computer system, from where it is forwarded to the second computer system following release by the user.

8. The method according to any one of the preceding claims, wherein the third computer system has at least one configuration data record (161) which specifies an external data source for requesting a further attribute (A) from the third computer system via the network (116), wherein the further attribute is requested after the at least one attribute has been read from the ID token, and after the third computer system has received the at least one signed attribute from the first computer system, wherein the request contains the at least one signed attribute.

9. A computer program product having instructions which can be executed by a computer system for the purpose of performing a method according to any one of the preceding claims.

10. An ID token having
- a protected memory area (124) for storing at least one attribute,
- means (120, 130) for authenticating a user (102), associated with the ID token, to the ID token,
- means (134) for authenticating a first computer system (136) to the ID token,
- means (132) for setting up a protected connection via a network (116) to the first computer system, via which connection the first computer system can read the at least one attribute,
wherein a necessary prerequisite for the reading of the at least one attribute from the ID token by the first computer system is the successful authentication of the user and of the first computer system to the ID token, and wherein the at least one attribute read from the ID token is signed by the first computer system and the signed attribute is transmitted from the first computer system to a second computer system.

11. The ID token according to claim 10, having means for the end-to-end encryption of the connection for protected transmission of the at least one of the attributes to the first computer system.

12. The ID token according to claim 10 or 11, wherein it is an electronic device, particularly a USB stick, or a document, particularly a document of value or security document.

13. A computer system having
- means (138) for receiving an attribute specification (166) via a network (116), wherein the attribute specification specifies at least one attribute,
- means (142, 144, 146) for authentication to an ID token (106) via the network (116),
- means for reading at least one attribute from the ID token via a protected connection via the network (116),
wherein a prerequisite for the reading of the at least one attribute is that a user associated with the ID token and the computer system have authenticated themselves to the ID token,
- means for signing the attribute read from the ID token,
- means for transmitting the signed attribute to a second computer system.

14. The computer system according to claim 13, wherein the means (138) are designed for receiving the attribute specification from a second computer system, and having means (138) for sending the at least one attribute which has been read from the ID token to a third computer system (100) for the purpose of forwarding to the second computer system.

15. The computer system according to any one of claims 13 to 14, having a plurality of the certificates (144.1; 144.2) with different read rights, wherein the computer system is designed to take the receipt of the attribute specification as a basis for selecting at least one of the certificates which has the read rights which are sufficient for reading the attributes specified in the attribute specification.

## Revendications

1. Procédé de lecture d'au moins un attribut stocké dans un jeton d'identification (106, 106'), où le jeton d'identification est associé à un utilisateur, avec les étapes suivantes :
- authentification de l'utilisateur vis-à-vis du jeton d'identification,
- authentification d'un premier système informatique (136) vis-à-vis du jeton d'identification par l'intermédiaire d'un réseau (116),
- après l'authentification réussie de l'utilisateur et du premier système informatique vis-à-vis du jeton d'identification, accès en lecture du premier système informatique pour l'au moins un attribut stocké dans le jeton d'identification par l'intermédiaire du réseau (116) avec les étapes suivantes complémentaires :
i. signature de l'au moins un attribut lu à partir du jeton d'identification par le premier système informatique,
ii. transfert de l'attribut signé du premier système informatique vers un deuxième système informatique.

2. Procédé selon la revendication 1, dans lequel l'authentification du premier système informatique vis-à-vis du jeton d'identification est effectuée à l'aide d'un certificat (144) du premier système informatique, où le certificat contient une indication des attributs en question stockés dans le jeton d'identification pour lesquels le premier système informatique est habilité à avoir un accès en lecture.

3. Procédé selon la revendication 2, dans lequel le jeton d'identification vérifie l'habilitation en lecture du premier système informatique pour l'accès en lecture pour au moins un des attributs à l'aide du certificat.

4. Procédé selon l'une des revendications précédentes, avec les étapes suivantes complémentaires :
- envoi d'une requête (164) d'un troisième système informatique (100) vers le deuxième système informatique,
- spécification d'un ou de plusieurs attributs par le deuxième système informatique,
- envoi de la spécification d'attribut (160) du deuxième système informatique vers le premier système informatique,
où l'accès en lecture du premier système informatique a lieu pour lire un ou plusieurs attributs spécifiés dans la spécification d'attributs à partir du jeton d'identification.

5. Procédé selon la revendication 4, dans lequel la requête (164) contient un identificateur pour l'identification du premier système informatique par le deuxième système informatique, et où le transfert de la spécification d'attribut est effectué du deuxième système informatique vers le premier système informatique sans branchement intermédiaire du troisième système informatique.

6. Procédé selon la revendication 4, dans lequel le troisième système informatique présente plusieurs suites de données de configuration (158, 160, ..) prédéfinies, où chaque suite des suites de données de configuration spécifie une partie des attributs, au moins une source de données et un premier système informatique à partir d'une quantité de premiers systèmes informatiques (136, 136'), où la spécification d'attribut du deuxième système informatique est d'abord transmise au troisième système informatique, de sorte qu'au moyen du troisième système informatique au moins l'une des suites de données de configuration est choisie, à laquelle une partie des attributs spécifie laquelle contient l'au moins un attribut spécifié dans la spécification d'attribut, et où le troisième système informatique transmet la spécification d'attribut plus loin vers le premier système informatique, et où une liaison entre le premier système informatique et le jeton d'identification spécifié dans la suite de données de configuration choisie par l'indication de la source de données est établie par l'intermédiaire du troisième système informatique.

7. Procédé selon l'une des revendications précédentes, dans lequel l'au moins un attribut lu par le premier système informatique à partir du jeton d'identification est envoyé au troisième système informatique, à partir duquel il est transféré plus loin vers le deuxième système informatique après la libération par l'utilisateur.

8. Procédé selon l'une des revendications précédentes, dans lequel le troisième système informatique a au moins une suite de données de configuration (161), laquelle spécifie une source de données externe pour la requête d'un nouvel attribut (A) du troisième système informatique par l'intermédiaire du réseau (116), où la requête du nouvel attribut a lieu après que l'au moins un attribut ait été lu à partir du jeton d'identification, et après que le troisième système informatique ait réceptionné l'au moins un attribut signé du premier système informatique, où la requête contient l'au moins un attribut signé.

9. Produit d'un programme d'ordinateur avec des instructions exécutables par un système informatique pour la réalisation d'un procédé selon l'une des revendications précédentes.

10. Jeton d'identification avec
- une zone de mémoire (124) protégée pour le stockage d'au moins un attribut,
- des moyens (120, 130) pour l'authentification d'un utilisateur (12) associé au jeton d'identification vis-à-vis du jeton d'identification,
- des moyens (134) pour l'authentification d'un premier système informatique (136) vis-à-vis du jeton d'identification,
- des moyens (132) pour l'établissement d'une liaison protégée vers le premier système informatique par l'intermédiaire d'un réseau (116), par l'intermédiaire de laquelle le premier système informatique peut lire l'au moins un attribut,
où une condition nécessaire pour la lecture de l'au moins un attribut à partir du jeton d'identification par le premier système informatique est l'authentification réussie de l'utilisateur et du premier système informatique vis-à-vis du jeton d'identification, et où l'au moins un attribut lu à partir du jeton d'identification est signé par le premier système informatique et l'attribut signé est transféré du premier système informatique vers un deuxième système informatique.

11. Jeton d'identification selon la revendication 10, avec des moyens pour un cryptage de bout en bout de la liaison pour un transfert protégé de l'au moins un attribut vers le premier système informatique.

12. Jeton d'identification selon la revendication 10 ou 11, dans lequel il s'agit d'un appareil électronique, notamment d'une clé USB, ou d'un document, notamment un document de valeur ou de sécurité.

13. Système informatique avec
- des moyens (138) pour la réception d'une spécification d'attribut (166) par l'intermédiaire d'un réseau (116), où la spécification d'attribut spécifie au moins un attribut,
- des moyens (142, 144, 146) pour l'authentification d'un jeton d'identification (106) par l'intermédiaire du réseau (116),
- des moyens pour la lecture d'au moins un attribut à partir du jeton d'identification par l'intermédiaire d'une liaison protégée par le réseau (116),
où la lecture de l'au moins un attribut sous-entend qu'un utilisateur associé au jeton d'identification et le système informatique sont authentifiés vis-à-vis du jeton d'identification,
- des moyens pour la signature de l'attribut lu à partie du jeton d'identification,
- des moyens pour le transfert de l'attribut signé vers le deuxième système informatique.

14. Système informatique selon la revendication 13, dans lequel les moyens (138) pour la réception de la spécification d'attribut sont formés par un deuxième système informatique, et les moyens (138) pour l'envoi de l'au moins un attribut lu à partir du jeton d'identification vers un troisième système informatique (100) pour la transmission ultérieure au deuxième système informatique.

15. Système informatique selon l'une des revendications 13 à 14, avec plusieurs droits de lecture différents des certificats (144.1 ; 144.2), où le système informatique est conçu, en raison de la réception de la spécification d'attribut, pour choisir au moins l'un des certificats, lequel présente suffisamment de droits de lecture pour la lecture des attributs spécifiés dans la spécification d'attribut.
